# EUROPEAN PATENT SPECIFICATION

(11) **EP 3 955 607 B1**
(45) Date of publication and mention of the grant of the patent: **28.09.2022**
(21) Application number: 20190945.4
(22) Date of filing: 13.08.2020
(51) Int. Cl.: H04W 4/70, H04W 4/50, H04W 4/60

(54) **METHOD FOR TRANSMITTING AND/OR FOR USING A PROFILE INFORMATION OR AT LEAST PARTS THEREOF, SYSTEM, CLIENT COMMUNICATION DEVICE, SERVER ENTITY, PROGRAM AND COMPUTER PROGRAM PRODUCT**
VERFAHREN ZUR ÜBERTRAGUNG UND/ODER ZUR VERWENDUNG VON PROFILINFORMATIONEN ODER ZUMINDEST VON TEILEN DAVON, SYSTEM, CLIENT-KOMMUNIKATIONSVORRICHTUNG, SERVEREINHEIT, PROGRAMM UND COMPUTERPROGRAMMPRODUKT
PROCÉDÉ DE TRANSMISSION ET/OU D'UTILISATION D'INFORMATIONS DE PROFIL OU AU MOINS DE PARTIES DE CELLES-CI, SYSTÈME, DISPOSITIF DE COMMUNICATION CLIENT, ENTITÉ SERVEUR, PROGRAMME ET PRODUIT PROGRAMME INFORMATIQUE

(43) Date of publication of application: 16.02.2022
(73) Proprietor: Deutsche Telekom AG, 53113 Bonn (DE)
(72) Inventor: KALINER, Stefan, 53639 Königswinter (DE)
(74) Representative: Schwöbel, Thilo K.

(56) References cited:
- WO-A1-2019/233275

## Description

### BACKGROUND

The present invention relates a method for transmitting and/or for using a profile information or at least parts thereof, the profile information being transmitted from a server entity to a client communication device and the profile information being used in or by an embedded subscriber identity module of the client communication device.

Furthermore, the present invention relates to a system for transmitting and/or for using a profile information or at least parts thereof, the profile information being transmitted from a server entity to a client communication device and the profile information being used in or by an embedded subscriber identity module of the client communication device.

Additionally, the present invention relates to a client communication device and a server entity for transmitting and/or for using a profile information or at least parts thereof, the profile information being transmitted from a server entity to the client communication device and the profile information being used in or by an embedded subscriber identity module of the client communication device.

Furthermore, the present invention relates to a program and to a computer-readable medium for transmitting and/or for using a profile information or at least parts thereof according to the inventive method.

There are more and more communication services relying on mobile communication networks, and therefore the need to reliably distribute credentials to access these networks, typically using eSIM profiles, embedded subscriber identity module profiles to the respective client communication devices.

However, the application of the GSMA eSIM standards for over-the-air (OTA) download of network operator data (i.e. the so-called eSIM profiles) is unfavorable if not impossible in case the client communication devices have limited capabilities, e.g. for internet-of-things applications. Typically, such limitations exist e.g. in general complexity and especially in power consumption and bandwidth available for communication. The download of an eSIM profile (according to the GSMA eSIM standards for over-the-air download) is a comparatively extensive process which, under certain circumstances, would take too long according and would especially consume significant parts of the battery capacity, which would then no longer be available for the actual intended internet-of-things function of the respective client communication device.

This is an even bigger problem in case the eSIM profile has to be changed several times during the lifetime of the client communication device. The GSMA eSIM standards with their comparatively complicated protocols and processes are therefore generally not easily or efficiently applicable for such client communication devices or such a class of client communication devices.

WO 2019/233275 discloses a method for transmitting data to an embedded universal integrated circuit card of a terminal device by a narrowband internet of things network, that involves sending target data in a message to an application on the embedded universal integrated circuit card.

### SUMMARY

An object of the present invention is to provide a technically simple, effective and cost effective solution for transmitting and/or for using a profile information or at least parts thereof, the profile information being transmitted from a server entity to a client communication device, and nevertheless being able to provide a safe and secure procedure to transmit the profile information. A further object of the present invention is to provide a corresponding system, client communication device, server entity, and a corresponding program and computer-readable medium.

The object of the present invention is achieved by a method according to claim 1.

It is thereby advantageously possible according to the present invention that a much smaller part of the available resources of the client communication device are used for downloading (or transmitting) the needed eSIM profile information to the client communication device compared with typically used procedures, especially according to the standards defined by the GSMA (GSM Association or Global System for Mobile Communications Association).

It is conventionally known to use protocols of at least one lightweight machine-to-machine communication standard or interface, especially the OMA (Open Mobile Alliance) Lightweight M2M (LwM2M) architecture, for administrative purposes for restricted end devices or client communication devices. This architecture is optimized for resource-saving device management and is increasingly supported by device manufacturers and network operators worldwide.

However, typically, the use of LwM2M for the transmission or delivery of profile information (i.e. eSIM profiles) to client communication devices is not possible due to the complex bidirectional and multi-step eSIM communication according to the GSMA standard cannot be mapped to such a protocol.

According to the present invention, it is proposed to apply a new procedure for the optimized provision of profile information (i.e. eSIM profiles). According to the present invention, this profile information is transmitted from a server entity to a client communication device and the profile information is used in or by an embedded subscriber identity module of the client communication device. By means of using the profile information, the client communication device is then (i.e. after completing the transfer and installing and activating the profile information within the embedded subscriber identity module of the client communication device) enabled to operationally communicate with the mobile communication network for which the profile information have been transferred or transmitted. According to the present invention, the method comprises a first step during which the client communication device is temporarily connected (i.e. using an initial or temporary communication link) to the server entity, and wherein a lightweight machine-to-machine communication interface is established between the client communication device and the server entity. In a second step, the profile information is transmitted from the server entity to the client communication device, using the lightweight machine-to-machine communication interface.

According to the present invention, it is advantageously possible and preferred that the transmission of the profile information in the second step uses a device management functionality of the lightweight machine-to-machine communication interface, wherein the transmission of the profile information is either triggered by the client communication device or by the server entity,
wherein using the lightweight machine-to-machine communication interface to transmit the profile information in the second step especially corresponds to:
-- using the open mobile alliance lightweight machine-to-machine, OMA LWM2M, communication interface, especially using one or a plurality of the following protocols:
   -- Constrained Application Protocol, COAP,
   -- Message Queuing Telemetry Transport, MQTT, and
   -- Hyper Text Transfer Protocol, HTTP,
      or
-- directly using one or a plurality of the following protocols:
   -- Constrained Application Protocol, COAP,
   -- Message Queuing Telemetry Transport, MQTT, and
   -- Hyper Text Transfer Protocol, HTTP.

It is thereby advantageously possible to securely and efficiently transfer or transmit the profile information (or parts thereof or a part thereof) to the client communication device. The OMA LWM2M is an application layer protocol for internet-of-things device management, which is typically based on (or uses) other protocols such as COAP, MQTT and/or also HTTP. Although OMA LWM2M with COAP will likely be the most commonly used variant, MQTT or even HTTP are likewise able to be used. It is also possible and preferred according to alternative embodiments of the present invention that the transfer or the transmission of profile information (or of profiles) in the sense of the present invention (i.e. using a lightweight machine-to-machine communication interface) is based directly on these protocols, i.e. without using the OMA LWM2M layer on top of COAP and/or MQTT and/or HTTP. In the context of the present invention, the inventive implementation is mainly directed to using OMA LWM2M, however the inventive method, system, client communication device, and server entity is also able to be realized without OMA LWM2M, e.g. by using another protocol (such as based on COAP, MQTT or HTTP) instead.

According to the present invention, it is advantageously furthermore possible and preferred that in a third step, subsequent to the second step, the profile information is used to operatively communicate with the mobile communication network,
wherein the profile information especially is or corresponds to an eSIM, embedded subscriber identity module, profile information, to be loaded or to be installed in the client communication device or in the embedded subscriber identity module of the client communication device,
wheren the profile information is especially related to a subscription enabling the client communication device to operatively use or attach to or register to the mobile communication network,
wherein the profile information is especially a profile information that is specific or individual to the client communication device.

It is thereby advantageously possible according to the present invention to easily and efficiently transmit the profile information to the client communication device, and be able to more quickly use the client communication device in an operative manner.

According to the present invention, it is furthermore advantageously possible and preferred that the client communication device and/or the embedded subscriber identity module of the client communication device comprises or is assigned to an identifier information, especially being specific to that specific client communication device or to that specific embedded subscriber identity module, wherein the mobile communication network and/or the server entity comprises or is assigned to or is able to access a profile database and/or a profile generator,
wherein the profile database comprises the profile information associated or assigned to the identifier information and/or wherein the profile generator generates the profile information associated or assigned to the identifier information.

According to the present invention, it is advantageously possible and preferred that, during the first and second step, an initial or temporary communication link is used to temporarily connect the client communication device to the server entity, wherein with respect to the client communication device using the profile information to operatively use or attach to or register to the mobile communication network, the initial or temporary communication link corresponds to:
-- an different radio access technology, especially a local area or short-range radio access technology, especially wireless local area network technology, WLAN, and/or bluetooth technology, and/or
-- using a provisioning profile information, wherein the provisioning profile information is especially either
   -- a bootstrap profile information or
   -- a profile information regarding to another or previous mobile communication network or network operator used by the client communication device or
   -- a general profile information that is unspecific to the client communication device.

Thereby, it is advantageously possible to use different possibilities to realize the initial or temporary communication link.

Furthermore, it is advantageously possible and preferred according to the present invention that, in order to transmit the profile information from the server entity to the client communication device, the second step comprises the following sub-steps:
-- in a first sub-step, the server entity receives the identifier information of the client communication device and/or of the embedded subscriber identity module, wherein the server entity especially also receives a public key information corresponding to a secret key information of the client communication device and/or of the embedded subscriber identity module,
-- in a second sub-step, the server entity transmits the profile information to the client communication device and/or to the embedded subscriber identity module, wherein the profile information is especially transmitted in encrypted form,
-- in a third sub-step, the client communication device installs and/or activates the communication profile corresponding to the profile information, especially in dependency of further parameters detected by the client communication device, especially dependent on the roaming situation of the client communication device and/or dependent on a signal strength indicator detected by the client communication device.

Thereby, the inventive method is able to be applied in an efficient but sill safe and secure manner.

Furthermore, and according to an alternative embodiment of the present invention, it is preferred that the profile information is generated, especially by the profile generator, dependent on the identifier information of the client communication device and/or of the embedded subscriber identity module.

Thereby, it is advantageously possible to adapt the profile information to the client communication device and/or to reduce the need for a database to store the profile information.

According to a further preferred embodiment of the present invention, the profile information, especially in encrypted form, is taken from the database dependent on the identifier information of the client communication device and/or of the embedded subscriber identity module, or
the profile information is encrypted, especially by the profile generator, dependent on the identifier information of the client communication device and/or of the embedded subscriber identity module and the encryption key is taken from the public key information, previously received from the client communication device and/or from the embedded subscriber identity module.

Thereby, it is advantageously possible to securely and confidentially transmit the identifier information and the profile information.

According to a further preferred embodiment of the present invention, the embedded subscriber identity module of the client communication device corresponds to one or a plurality of the following:
-- a removable embedded universal integrated circuit card, removable eUICC,
-- a non-removable embedded universal integrated circuit card, non-removable eUICC,
-- an integrated embedded universal integrated circuit card, integrated eUICC,
-- an integrated subscriber identity module, integrated SIM,
wherein especially the identifier information and the public key information and the secret key information correspond to the embedded subscriber identity module, and the profile information being used in or by the embedded subscriber identity module.

It is thereby advantageously possible to realize the embedded subscriber identity module in a variety of different embodiments.

According to a further preferred embodiment of the present invention, the client communication device is a machine-to-machine communication device or a machine type communication device, especially a machine-to-machine communication device or machine type communication device being a resource-constrained device such that profile information transmission according to GSMA procedures would require more than 5% of especially energy resources, preferably more than 10% of especially energy resources.

Furthermore, the present invention relates to a system according to claim 9.

Furthermore, the present invention relates to a client communication device according to claim 10.

Still additionally, the present invention relates to a server entity according to claim 11.

Additionally, the present invention relates to a computer program according to claim 12.

Still additionally, the present invention relates to a computer-readable medium according to claim 13.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

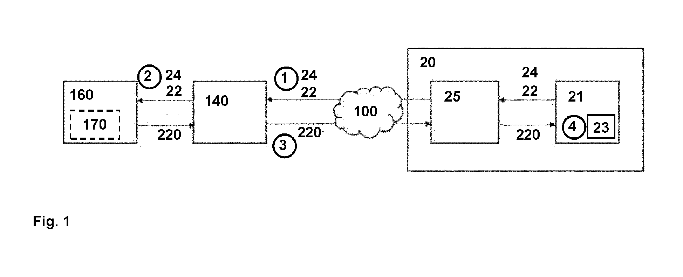

Figure 1 schematically illustrates the transfer of profile information to a client communication device according to the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, the transfer of profile information to a client communication device according to the present invention is schematically shown.

The client communication device 20 - typically a machine-to-machine communication device or an machine type communication device (also called internet-of-things device) - is connected to the access network (not specifically shown in Figure 1) of a mobile communication network 100. The client communication device 20 comprises an embedded subscriber identity module 21 (or eSIM), and a client module or client functionality 25 being able to implement a lightweight machine-to-machine communication interface towards a server entity 140, hence between the server entity 140 and the client communication device 20 (especially its client module or client functionality 25), the lightweight machine-to-machine communication interface is able to be implemented or used.

According to the present invention, a profile information 220 or at least parts or a part thereof are/is transmitted or transferred from the server entity 140 to the client communication device 20 (especially to its embedded subscriber identity module 21), and thereafter, the profile information 220 is able to be used in or by the embedded subscriber identity module 21 of the client communication device 20 to communicate with the mobile communication network 100, i.e. by means of using the profile information 220, the client communication device 20 is enabled to operationally communicate with a mobile communication network 100, i.e. while being connected to its access network. According to the present invention, in a first step, the client communication device 20 is temporarily connected to the server entity 140, and a lightweight machine-to-machine communication interface is established between the client communication device 20 and the server entity 140, and in a second step, the profile information 220 is transmitted from the server entity 140 to the client communication device 20, using the lightweight machine-to-machine communication interface (between the server entity 140 and the client module or client functionality 25 of the client communication device 20).

According to the present invention, the transmission of the profile information 220 in the second step preferably uses a device management functionality of the lightweight machine-to-machine communication interface. Thereby, a very simple procedure is able to be realized to transmit the profile information 220 (compared to the conventionally used eSIM standard to transmit the profile information), and the transmitted profile information 220 is able to be immediately installed and activated. In accordance with the OMA LwM2M standard, the transfer of the profile information 220 can be done at any time by means of the (dedicated) server entity 140, i.e. especially an OMA LwM2M server. The process can be started both by the client communication device 20 (or end device) and by the server entity 140. The OMA LwM2M server (server entity 140) typically receives the eSIM profiles (i.e. the profile information) from a separate profile database 160. The OMA LWM2M (open mobile alliance lightweight machine-to-machine) is an application layer protocol for internet-of-things device management, which is typically based on (or uses) other protocols such as COAP, MQTT and/or also HTTP. Although OMA LWM2M with COAP will likely be the most commonly used variant, MQTT or even HTTP are likewise able to be used. It is also possible and preferred according to alternative embodiments of the present invention that the transfer or the transmission of profile information (or of profiles) in the sense of the present invention (i.e. using a lightweight machine-to-machine communication interface) is based directly on these protocols, i.e. without using the OMA LWM2M layer on top of COAP and/or MQTT and/or HTTP. In the context of the present invention, the inventive implementation is mainly directed to using OMA LWM2M, however the inventive method, system, client communication device, and server entity is also able to be realized without OMA LWM2M, e.g. by using another protocol (such as based on COAP, MQTT or HTTP) instead.

After the second step, i.e. in a third step after the transfer of the profile information 220 to the client communication device 20, the profile information 220 is used by the client communication device 20 to operatively communicate with the mobile communication network 100. The profile information 220 especially is or corresponds to an eSIM, embedded subscriber identity module, profile information, to be loaded or to be installed in the client communication device 20 or in the embedded subscriber identity module 21 of the client communication device 20. Furthermore, the profile information 220 especially relates to a subscription enabling the client communication device 20 to operatively use or attach to or register to the mobile communication network 100, and the profile information 220 is especially a profile information that is specific or individual to the client communication device 20.

Hence, according to a preferred embodiment of the present invention, a procedure for the optimized provision of eSIM profiles (or profile information 220) is proposed, in which these are defined as a management object in an OMA LwM2M device management structure and sent to the client communication device 20 (or end device). The client communication device 20 and/or the embedded subscriber identity module 21 of the client communication device 20 comprises or is assigned to an identifier information 22, especially being specific to that specific client communication device 20 or to that specific embedded subscriber identity module 21, wherein the mobile communication network 100 and/or the server entity 140 comprises or is assigned to or is able to access the profile database 160 and/or a profile generator 170. The profile database 160 comprises the profile information 220 associated or assigned to the identifier information 22 and/or the profile generator 170 generates the profile information 220 associated or assigned to the identifier information 22. Hence, each client communication device 20 (or terminal device) is assigned an individual ID (identifier information 22) and an individual PKI (public key infrastructure) key pair consisting of a public key Kpub and a secret key Kpriv, wherein at least the ID (identifier information 22) and the Kpriv are securely stored in the terminal device (i.e. the client communication device 20). Prepared eSIM profiles are encrypted with the public keys (Kpub) and stored in the profile database 160 with the associated pieces of identifer information (i.e. IDs). The profile database 160 now contains encrypted profiles encP(ID) (i.e. inter alia the (specific) profile information 220) with the corresponding pieces of identifier information, IDs, of the target devices (i.e. inter alia the (specific) identifer information 22 of the client communication device 20). Hence, especially the server entity 140 receives the identifier information 22 of the client communication device 20 and/or of the embedded subscriber identity module 21, and - especially - the server entity 140 also receives (i.e. in addition to the identifier information 22) a public key information 24 (or Kpub) corresponding to a secret key information 23 (or Kpriv) of the client communication device 20 and/or of the embedded subscriber identity module 21, this secret key information 23 (Kpriv) of the client communication device 20 and/or of the embedded subscriber identity module 21 especially being (especially permanently) stored on the client communication device 20 and/or on the embedded subscriber identity module 21. Thereafter, the server entity 140 transmits the profile information 220 to the client communication device 20 and/or to the embedded subscriber identity module 21, wherein the profile information 220 is especially transmitted in encrypted form (i.e. the profile information 220 is especially encrypted using the public key information 24 (or Kpub)); then the communication profile corresponding to the profile information 220 is installed and/or activated by the client communication device 20, especially in dependency of further parameters detected by the client communication device 20, especially dependent on the roaming situation of the client communication device 20 and/or dependent on a signal strength indicator detected by the client communication device 20.

To load (or to transmit) the profile information 220 to the client communication device 20, an OMA LwM2M communication channel is first established between the OMA LwM2M server (server entity 140) and the LwM2M client 25 of the client communication device 20 (or terminal device) especially in accordance with the OMA LwM2M standard (started by the client 20 or by the server 140). Then the following processing steps are performed according to the present invention:
-- (1) the server reads the ID (i.e. the identifier information 22) of the terminal device (i.e. the client communication device 20) and any further information;
-- (2) the server (server entity 140) retrieves the encrypted profile encP(ID) (i.e. the profile information 220) from the profile database using the ID (i.e the identifier information 22);
-- (3) the server (server entity 140) transmits the encrypted profile encP(ID) (i.e. the profile information 220) to the terminal device (client communication device 20); and
-- (4) the terminal device (client communication device 20) decrypts and installs the received profile information 220. These four processing steps are indicated in Figure 1 by means of encircled numbers 1 to 4.

The communication between the server entity 140 and the client communication device 20 is limited only to the read operation (processing step 1) and the write operation (processing step 3) especially according to the OMA LwM2M standard. The data elements (i.e. the identifier information (ID) 22 on the one hand, and the profile information 220 (EncP) on the other hand, are especially objects of the OMA LwM2M device management tree.

The inventive process of the eSIM profile (profile information 220) download thus takes full advantage of the OMA LwM2M standard, which is especially relevant for devices (client communication devices 20) with limited capabilities. If the profile (profile information 220) is additionally optimized in size, this provides the possibility to extend the eSIM concept also to the cost-sensitive area of internet-of-things devices (or machine-to-machine communication devices or machine type communication devices).

According to the present invention, during the first and second step, an initial or temporary communication link is used to temporarily connect the client communication device 20 to the server entity 140. The initial or temporary communication link corresponds (with respect to the client communication device 20 using the profile information 220 to operatively use or attach to or register to the mobile communication network 100) to:
-- an different radio access technology, especially a local area or short-range radio access technology, especially wireless local area network technology, WLAN, and/or bluetooth technology, and/or
-- using a provisioning profile information (i.e. another profile information already present on or within the client communication device 20), wherein the provisioning profile information is especially either
   -- a bootstrap profile information or
   -- a profile information regarding to another or previous mobile communication network or network operator used by the client communication device 20 or
   -- a general profile information that is unspecific to the client communication device 20.

Preferably, the profile information is generated, especially by the profile generator 170, dependent on the identifier information 22 of the client communication device 20 and/or of the embedded subscriber identity module 21.

According to alternative embodiments of the present invention, the newly installed profile (i.e. the profile information 220) can be activated by the terminal device (client communication device 20) either immediately or depending on further parameters (e.g. roaming situation or reception field strength). Altenatively, the profile database 160 can be integrated into the OMA LwM2M server (i.e. the server entity 140) and/or the profile database 160 is able to be part of the profile generator 170. Alternatively, the profile generator can itself contain an OMA LwM2M server (i.e. the server entity 140). It is furthermore possible and preferred according to the present invention, that the profiles (i.e. the profile information 220) are generated and encrypted online, i.e. on-demand. Furthermore, it is alternatively possible according to the present invention that the selection or generation of the profiles can be made depending on further information supplied by the terminal device (client communication device 20), especially during the step of the transfer of the identifier information 22 to the server entity 140.

## Claims

1. Method for transmitting and/or for using a profile information (220) or at least parts thereof, the profile information (220) being transmitted from a server entity (140) to a client communication device (20) and the profile information (220) being used in or by an embedded subscriber identity module (21) of the client communication device (20), wherein, by means of using the profile information (220), the client communication device (20) is enabled to operationally communicate with a mobile communication network (100), wherein the client communication device (20) and/or the embedded subscriber identity module (21) of the client communication device (20) comprises or is assigned to an identifier information (22) that is specific to that specific client communication device (20) or to that specific embedded subscriber identity module (21), wherein the mobile communication network (100) and/or the server entity (140) comprises or is assigned to or is able to access a profile database (160) and/or a profile generator (170),
wherein the profile database (160) comprises the profile information (220) associated or assigned to the identifier information (22) and/or wherein the profile generator (170) generates the profile information (220) associated or assigned to the identifier information (22),
wherein the method comprises the following steps:
-- in a first step, the client communication device (20) is temporarily connected to the server entity (140), wherein a lightweight machine-to-machine, communication interface is established between the client communication device (20) and the server entity (140),
-- in a second step, the profile information (220) is transmitted from the server entity (140) to the client communication device (20), using the lightweight machine-to-machine communication interface,
wherein the profile information (220) is taken in encrypted form from the database (160) dependent on the identifier information (22) of the client communication device (20) and/or of the embedded subscriber identity module (21),
or
the profile information (220) is encrypted dependent on the identifier information (22) of the client communication device (20) and/or of the embedded subscriber identity module (21) and the encryption key is taken from public key information (24), previously received from the client communication device (20) and/or from the embedded subscriber identity module (21).

2. Method according to claim 1, wherein the transmission of the profile information (220) in the second step uses a device management functionality of the lightweight machine-to-machine communication interface, wherein the transmission of the profile information (220) is either triggered by the client communication device (20) or by the server entity (140),
wherein using the lightweight machine-to-machine communication interface to transmit the profile information (220) in the second step especially corresponds to:
-- using the open mobile alliance lightweight machine-to-machine OMA LWM2M communication interface, especially using one or a plurality of the following protocols:
-- Constrained Application Protocol, COAP,
-- Message Queuing Telemetry Transport, MQTT, and
-- Hyper Text Transfer Protocol, HTTP,
or
-- directly using one or a plurality of the following protocols:
-- Constrained Application Protocol, COAP,
-- Message Queuing Telemetry Transport, MQTT, and
-- Hyper Text Transfer Protocol, HTTP.

3. Method according to one of the preceding claims, wherein in a third step, subsequent to the second step, the profile information (220) is used to operatively communicate with the mobile communication network (100), wherein the profile information (220) especially is or corresponds to an embedded subscriber identity module profile information to be loaded or to be installed in the client communication device (20) or in the embedded subscriber identity module (21) of the client communication device (20), wherein the profile information (220) is especially related to a subscription enabling the client communication device (20) to operatively use or attach to or register to the mobile communication network (100),
wherein the profile information (220) is especially a profile information that is specific or individual to the client communication device (20).

4. Method according to one of the preceding claims, wherein, during the first and second step, an initial or temporary communication link is used to preliminarily connect the client communication device (20) to the server entity (140), wherein with respect to the client communication device (20) using the profile information (220) to operatively use or attach to or register to the mobile communication network (100), the initial or temporary communication link corresponds to:
-- a different radio access technology, especially a local area or short-range radio access technology, especially wireless local area network technology, WLAN, and/or bluetooth technology, and/or
-- a provisioning profile information, wherein the provisioning profile information is especially either
-- a bootstrap profile information or
-- a profile information regarding to another or previous mobile communication network or network operator used by the client communication device (20) or
-- a general profile information that is unspecific to the client communication device (20).

5. Method according to one of the preceding claims, wherein, in order to transmit the profile information (220) from the server entity (140) to the client communication device (20), the second step comprises the following sub-steps:
-- in a first sub-step, the server entity (140) receives the identifier information (22) of the client communication device (20) and/or of the embedded subscriber identity module (21), wherein the server entity (140) especially also receives a public key information (24) corresponding to a secret key information (23) of the client communication device (20) and/or of the embedded subscriber identity module (21),
-- in a second sub-step, the server entity (140) transmits the profile information (220) to the client communication device (20) and/or to the embedded subscriber identity module (21), wherein the profile information (220) is especially transmitted in encrypted form,
-- in a third sub-step, the client communication device (20) installs and/or activates the communication profile corresponding to the profile information (220), especially in dependency of further parameters detected by the client communication device (20), especially dependent on the roaming situation of the client communication device (20) and/or dependent on a signal strength indicator detected by the client communication device (20).

6. Method according to one of the preceding claims, wherein the profile information is generated, especially by the profile generator (170), dependent on the identifier information (22) of the client communication device (20) and/or of the embedded subscriber identity module (21).

7. Method according to one of the preceding claims, wherein the embedded subscriber identity module (21) of the client communication device (20) corresponds to one or a plurality of the following:
-- a removable embedded universal integrated circuit card, removable eUICC,
-- a non-removable embedded universal integrated circuit card, non-removable eUICC,
-- an integrated embedded universal integrated circuit card, integrated eUICC,
-- an integrated subscriber identity module, integrated SIM,
wherein especially the identifier information (22) and the public key information (24) and the secret key information (23) correspond to the embedded subscriber identity module (21), and the profile information (220) being used in or by the embedded subscriber identity module (21).

8. Method according to one of the preceding claims, wherein the client communication device (20) is a machine-to-machine communication device or a machine type communication device, especially a machine-to-machine communication device or machine type communication device being a resource-constrained device such that profile information transmission according to GSMA procedures would require more than 5% of especially energy resources, preferably more than 10% of especially energy resources.

9. System for transmitting and/or for using a profile information (220) or at least parts thereof, the profile information (220) being transmitted from a server entity (140) to a client communication device (20) and the profile information (220) being used in or by an embedded subscriber identity module (21) of the client communication device (20), wherein, by means of using the profile information (220), the client communication device (20) is enabled to operationally communicate with a mobile communication network (100), wherein the system comprises the mobile communication network (100), the server entity (140), and the client communication device (20), wherein the client communication device (20) and/or the embedded subscriber identity module (21) of the client communication device (20) comprises or is assigned to an identifier information (22) that is specific to that specific client communication device (20) or to that specific embedded subscriber identity module (21), wherein the mobile communication network (100) and/or the server entity (140) comprises or is assigned to or is configured to access a profile database (160) and/or a profile generator (170),
wherein the profile database (160) comprises the profile information (220) associated or assigned to the identifier information (22) and/or wherein the profile generator (170) is configured to generate the profile information (220) associated or assigned to the identifier information (22),
wherein the system is configured such that:
-- the client communication device (20) is temporarily connected to the server entity (140), wherein a lightweight machine-to-machine communication interface is established between the client communication device (20) and the server entity (140),
-- the profile information (220) is transmitted from the server entity (140) to the client communication device (20), using the lightweight machine-to-machine communication interface,
wherein the mobile communication network (100) and/or the server entity (140) is configured to take the profile information (220) in encrypted form from the database (160) in dependency on the identifier information (22) of the client communication device (20) and/or of the embedded subscriber identity module (21),
or
wherein the profile generator (170) is configured to encrypt the profile information (220) in dependency on the identifier information (22) of the client communication device (20) and/or of the embedded subscriber identity module (21), wherein the profile generator (170) is configured to take the encryption key from public key information (24), previously received from the client communication device (20) and/or from the embedded subscriber identity module (21).

10. Client communication device (20) for transmitting and/or for using a profile information (220) or at least parts thereof, the profile information (220) being transmitted from a server entity (140) to the client communication device (20) and the profile information (220) being used in or by an embedded subscriber identity module (21) of the client communication device (20), wherein, by means of using the profile information (220), the client communication device (20) is enabled to operationally communicate with a mobile communication network (100),
wherein the client communication device (20) is configured to establish a lightweight machine-to-machine communication interface to the server entity (140) and to receive and use the profile information (220) in accordance with the method of claims 1 to 8.

11. Server entity (140) for transmitting and/or for using a profile information (220) or at least parts thereof, the profile information (220) being transmitted from the server entity (140) to a client communication device (20) and the profile information (220) being used in or by an embedded subscriber identity module (21) of the client communication device (20), wherein, by means of using the profile information (220), the client communication device (20) is enabled to operationally communicate with a mobile communication network (100), wherein the server entity (140) is configured to establish a lightweight machine-to-machine communication interface to the client communication device (20) and to provide and transmit the profile information (220) in accordance with the method of claims 1 to 8.

12. Computer program comprising a computer readable program code, which, when executed on a computer and/or on a client communication device (20) and/or on a server entity (140) and/or on a network node of a mobile communication network (100), or in part on a client communication device (20) and/or in part on a server entity (140) and/or in part on a network node of a mobile communication network (100), causes the computer and/or the client communication device (20) and/or the server entity (140) and/or the network node of the mobile communication network (100) to perform a method according one of claims 1 to 8.

13. Computer-readable medium comprising instructions which when executed on a computer and/or on a client communication device (20) and/or on a server entity (140) and/or on a network node of a mobile communication network (100), or in part on a client communication device (20) and/or in part on a server entity (140) and/or in part on a network node of a mobile communication network (100), causes the computer and/or the client communication device (20) and/or the server entity (140) and/or the network node of the mobile communication network (100) to perform a method according one of claims 1 to 8.

## Patentansprüche

1. Verfahren zum Senden und/oder Verwenden einer Profilinformation (220) oder mindestens Teilen einer Profilinformation (220), wobei die Profilinformation (220) von einer Server-Entität (140) an eine Client-Kommunikationsvorrichtung (20) gesendet wird und die Profilinformation (220) in einem eingebetteten Teilnehmer-Identitätsmodul (21) oder durch ein eingebettetes Teilnehmer-Identitätsmodul (21) der Client-Kommunikationsvorrichtung (20) verwendet wird, wobei die Client-Kommunikationsvorrichtung (20) durch Verwenden der Profilinformation (220) befähigt wird, mit einem Mobilkommunikationsnetz (100) operativ zu kommunizieren, wobei die Client-Kommunikationsvorrichtung (20) und/oder das eingebettete Teilnehmer-Identitätsmodul (21) der Client-Kommunikationsvorrichtung (20) eine Identifikator-Information (22) umfasst oder einer Identifikator-Information (22) zugewiesen ist, die für diese spezifische Client-Kommunikationsvorrichtung (20) oder dieses spezifische eingebettete Teilnehmer-Identitätsmodul (21) spezifisch ist, wobei das Mobilkommunikationsnetz (100) und/oder die Server-Entität (140) eine Profildatenbank (160) und/oder einen Profilgenerator (170) umfassen oder einer Profildatenbank (160) und/oder einem Profilgenerator (170) zugewiesen sind oder auf eine Profildatenbank (160) und/oder einen Profilgenerator (170) zugreifen können, wobei die Profildatenbank (160) die der Identifikator-Information (22) zugeordnete oder zugewiesene Profilinformation (220) umfasst und/oder wobei der Profilgenerator (170) die der Identifikator-Information (22) zugeordnete oder zugewiesene Profilinformation (220) generiert,
wobei das Verfahren die folgenden Schritte umfasst:
- in einem ersten Schritt wird die Client-Kommunikationsvorrichtung (20) vorübergehend mit der Server-Entität (140) verbunden, wobei eine Lightweight Machine-to-Machine-Kommunikationsschnittstelle zwischen der Client-Kommunikationsvorrichtung (20) und der Server-Entität (140) eingerichtet wird,
- in einem zweiten Schritt wird die Profilinformation (220) unter Verwendung der Lightweight Machine-to-Machine-Kommunikationsschnittstelle von der Server-Entität (140) an die Client-Kommunikationsvorrichtung (20) gesendet,
wobei die Profilinformation (220) in verschlüsselter Form in Abhängigkeit von der Identifikator-Information (22) der Client-Kommunikationsvorrichtung (20) und/oder des eingebetteten Teilnehmer-Identitätsmoduls (21) aus der Datenbank (160) entnommen wird,
oder
die Profilinformation (220) in Abhängigkeit von der Identifikator-Information (22) der Client-Kommunikationsvorrichtung (20) und/oder des eingebetteten Teilnehmer-Identitätsmoduls (21) verschlüsselt wird und der Verschlüsselungsschlüssel aus einer Öffentlichen-Schlüssel-Information (24) entnommen wird, die zuvor von der Client-Kommunikationsvorrichtung (20) und/oder von dem eingebetteten Teilnehmer-Identitätsmodul (21) empfangen wurde.

2. Verfahren nach Anspruch 1, wobei das Senden der Profilinformation (220) in dem zweiten Schritt eine Vorrichtungsmanagementfunktionalität der Lightweight Machine-to-Machine-Kommunikationsschnittstelle verwendet, wobei das Senden der Profilinformation (220) entweder durch die Client-Kommunikationsvorrichtung (20) oder durch die Server-Entität (140) ausgelöst wird,
wobei das Verwenden der Lightweight Machine-to-Machine-Kommunikationsschnittstelle zum Senden der Profilinformation (220) in dem zweiten Schritt insbesondere Folgendem entspricht:
- dem Verwenden der Open Mobile Alliance Lightweight Machine-to-Machine (OMA LWM2M)-Kommunikationsschnittstelle, insbesondere dem Verwenden eines oder mehrerer der folgenden Protokolle:
- Constrained Application Protocol (COAP),
- Message Queuing Telemetry Transport (MQTT), und
- Hyper Text Transfer Protocol (HTTP),
oder
- dem direkten Verwenden eines oder mehrerer der folgenden Protokolle:
- Constrained Application Protocol (COAP),
- Message Queuing Telemetry Transport (MQTT), und
- Hyper Text Transfer Protocol (HTTP).

3. Verfahren nach einem der vorangehenden Ansprüche, wobei in einem dritten Schritt, im Anschluss an den zweiten Schritt, die Profilinformation (220) zur operativen Kommunikation mit dem Mobilkommunikationsnetz (100) verwendet wird, wobei die Profilinformation (220) insbesondere eine Profilinformation eines eingebetteten Teilnehmer-Identitätsmoduls ist, oder einer Profilinformation eines eingebetteten Teilnehmer-Identitätsmoduls entspricht, die in die Client-Kommunikationsvorrichtung (20) oder in das eingebettete Teilnehmer-Identitätsmodul (21) der Client-Kommunikationsvorrichtung (20) geladen oder in der Client-Kommunikationsvorrichtung (20) oder in dem eingebetteten Teilnehmer-Identitätsmodul (21) der Client-Kommunikationsvorrichtung (20) installiert werden soll, wobei sich die Profilinformation (220) insbesondere auf eine Subskription bezieht, welche die Client-Kommunikationsvorrichtung (20) befähigt, das Mobilkommunikationsnetz (100) operativ zu nutzen oder sich operativ an das Mobilkommunikationsnetz (100) anzubinden oder sich operativ in dem Mobilkommunikationsnetz (100) zu registrieren,
wobei die Profilinformation (220) insbesondere eine Profilinformation ist, die für die Client-Kommunikationsvorrichtung (20) spezifisch oder individuell ist.

4. Verfahren nach einem der vorangehenden Ansprüche, wobei während des ersten und zweiten Schrittes eine anfängliche oder temporäre Kommunikationsverbindung verwendet wird, um die Client-Kommunikationsvorrichtung (20) vorläufig mit der Server-Entität (140) zu verbinden,
wobei in Bezug auf die Client-Kommunikationsvorrichtung (20), welche die Profilinformation (220) verwendet, um das Mobilkommunikationsnetz (100) operativ zu nutzen oder sich operativ an das Mobilkommunikationsnetz (100) anzubinden oder sich operativ in dem Mobilkommunikationsnetz (100) zu registrieren, die anfängliche oder temporäre Kommunikationsverbindung Folgendem entspricht:
- einer anderen Funkzugangstechnologie, insbesondere einer Nahbereichs- oder Kurzstrecken-Funkzugangstechnologie, insbesondere einer Wireless Local Area Network (WLAN)-Technologie und/oder einer Bluetooth-Technologie, und/oder
- einer Bereitstellungsprofilinformation, wobei die Bereitstellungsprofilinformation insbesondere eines von Folgendem ist:
- eine Bootstrap-Profilinformation oder
- eine Profilinformation in Bezug auf ein anderes oder vorheriges Mobilkommunikationsnetz oder einen anderen oder vorherigen Mobilkommunikationsnetzbetreiber, das bzw. der durch die Client-Kommunikationsvorrichtung (20) verwendet wird, oder
- eine allgemeine Profilinformation, die für die Client-Kommunikationsvorrichtung (20) nicht-spezifisch ist.

5. Verfahren nach einem der vorangehenden Ansprüche, wobei zum Zweck des Sendens der Profilinformation (220) von der Server-Entität (140) an die Client-Kommunikationsvorrichtung (20) der zweite Schritt die folgenden Teilschritte umfasst:
- in einem ersten Teilschritt empfängt die Server-Entität (140) die Identifikator-Information (22) der Client-Kommunikationsvorrichtung (20) und/oder des eingebetteten Teilnehmer-Identitätsmoduls (21), wobei die Server-Entität (140) insbesondere auch eine Öffentliche-Schlüssel-Information (24) empfängt, die einer Geheimen-Schlüssel-Information (23) der Client-Kommunikationsvorrichtung (20) und/oder des eingebetteten Teilnehmer-Identitätsmoduls (21) entspricht,
- in einem zweiten Teilschritt sendet die Server-Entität (140) die Profilinformation (220) an die Client-Kommunikationsvorrichtung (20) und/oder an das eingebettete Teilnehmer-Identitätsmodul (21), wobei die Profilinformation (220) insbesondere in verschlüsselter Form gesendet wird,
- in einem dritten Teilschritt installiert und/oder aktiviert die Client-Kommunikationsvorrichtung (20) das der Profilinformation (220) entsprechende Kommunikationsprofil, insbesondere in Abhängigkeit von weiteren durch die Client-Kommunikationsvorrichtung (20) detektierten Parametern, insbesondere in Abhängigkeit von der Roaming-Situation der Client-Kommunikationsvorrichtung (20) und/oder in Abhängigkeit von einem durch die Client-Kommunikationsvorrichtung (20) detektierten Signalstärkeindikator.

6. Verfahren nach einem der vorangehenden Ansprüche, wobei die Profilinformation insbesondere durch den Profilgenerator (170) in Abhängigkeit von der Identifikator-Information (22) der Client-Kommunikationsvorrichtung (20) und/oder des eingebetteten Teilnehmer-Identitätsmoduls (21) generiert wird.

7. Verfahren nach einem der vorangehenden Ansprüche, wobei das eingebettete Teilnehmer-Identitätsmodul (21) der Client-Kommunikationsvorrichtung (20) einem oder mehreren von Folgendem entspricht:
- einer herausnehmbaren eingebetteten universellen Integrierten-Schaltkreis-Karte (herausnehmbaren embedded Universal Integrated Circuit Card (eUlCC)),
- einer nicht-herausnehmbaren eingebetteten universellen Integrierten-Schaltkreis-Karte (nicht-herausnehmbaren embedded Universal Integrated Circuit Card (eUlCC)),
- einer integrierten eingebetteten universellen Integrierten-Schaltkreis-Karte (integrierten embedded Universal Integrated Circuit Card (eUlCC)),
- einem integrierten Teilnehmer-Identitätsmodul (integrierten Subscriber Identity Module (SIM)),
wobei insbesondere die Identifikator-Information (22) und die Öffentliche-Schlüssel-Information (24) und die Geheime-Schlüssel-Information (23) dem eingebetteten Teilnehmer-Identitätsmodul (21) entsprechen, und die Profilinformation (220) in dem eingebetteten Teilnehmer-Identitätsmodul (21) oder durch das eingebettete Teilnehmer-Identitätsmodul (21) verwendet wird.

8. Verfahren nach einem der vorangehenden Ansprüche, wobei die Client-Kommunikationsvorrichtung (20) eine Maschine-Maschine-Kommunikationsvorrichtung oder eine Kommunikationsvorrichtung vom Maschinentyp ist, insbesondere eine Maschine-Maschine-Kommunikationsvorrichtung oder eine Kommunikationsvorrichtung vom Maschinentyp, die eine ressourcenbeschränkte Vorrichtung ist, dergestalt, dass die Profilinformationsübertragung gemäß GSMA-Verfahren mehr als 5 % von insbesondere Energieressourcen, bevorzugt mehr als 10 % von insbesondere Energieressourcen, erfordern würde.

9. System zum Senden und/oder Verwenden einer Profilinformation (220) oder mindestens Teilen einer Profilinformation (220), wobei die Profilinformation (220) von einer Server-Entität (140) an eine Client-Kommunikationsvorrichtung (20) gesendet wird und die Profilinformation (220) in einem eingebetteten Teilnehmer-Identitätsmodul (21) oder durch ein eingebettetes Teilnehmer-Identitätsmodul (21) der Client-Kommunikationsvorrichtung (20) verwendet wird, wobei die Client-Kommunikationsvorrichtung (20) durch Verwenden der Profilinformation (220) befähigt wird, mit einem Mobilkommunikationsnetz (100) operativ zu kommunizieren, wobei das System das Mobilkommunikationsnetz (100), die Server-Entität (140) und die Client-Kommunikationsvorrichtung (20) umfasst, wobei die Client-Kommunikationsvorrichtung (20) und/oder das eingebettete Teilnehmer-Identitätsmodul (21) der Client-Kommunikationsvorrichtung (20) eine Identifikator-Information (22) umfasst oder einer Identifikator-Information (22) zugewiesen ist, die für diese spezifische Client-Kommunikationsvorrichtung (20) oder dieses spezifische eingebettete Teilnehmer-Identitätsmodul (21) spezifisch ist, wobei das Mobilkommunikationsnetz (100) und/oder die Server-Entität (140) eine Profildatenbank (160) und/oder einen Profilgenerator (170) umfassen oder einer Profildatenbank (160) und/oder einem Profilgenerator (170) zugewiesen sind oder dafür konfiguriert sind, auf eine Profildatenbank (160) und/oder einen Profilgenerator (170) zuzugreifen,
wobei die Profildatenbank (160) die der Identifikator-Information (22) zugeordnete oder zugewiesene Profilinformation (220) umfasst und/oder wobei der Profilgenerator (170) dafür konfiguriert ist, die der Identifikator-Information (22) zugeordnete oder zugewiesene Profilinformation (220) zu generieren,
wobei das System so konfiguriert ist, dass:
- die Client-Kommunikationsvorrichtung (20) vorübergehend mit der Server-Entität (140) verbunden wird, wobei eine Lightweight Machine-to-Machine-Kommunikationsschnittstelle zwischen der Client-Kommunikationsvorrichtung (20) und der Server-Entität (140) eingerichtet wird,
- die Profilinformation (220) unter Verwendung der Lightweight Machine-to-Machine-Kommunikationsschnittstelle von der Server-Entität (140) an die Client-Kommunikationsvorrichtung (20) gesendet wird,
wobei das Mobilkommunikationsnetz (100) und/oder die Server-Entität (140) dafür konfiguriert sind, die Profilinformation (220) in Abhängigkeit von der Identifikator-Information (22) der Client-Kommunikationsvorrichtung (20) und/oder des eingebetteten Teilnehmer-Identitätsmoduls (21) in verschlüsselter Form aus der Datenbank (160) zu entnehmen,
oder
wobei der Profilgenerator (170) dafür konfiguriert ist, die Profilinformation (220) in Abhängigkeit von der Identifikator-Information (22) der Client-Kommunikationsvorrichtung (20) und/oder des eingebetteten Teilnehmer-Identitätsmoduls (21) zu verschlüsseln, wobei der Profilgenerator (170) dafür konfiguriert ist, den Verschlüsselungsschlüssel aus der Öffentlichen-Schlüssel-Information (24) zu entnehmen, die zuvor von der Client-Kommunikationsvorrichtung (20) und/oder dem eingebetteten Teilnehmer-Identitätsmodul (21) empfangen wurde.

10. Client-Kommunikationsvorrichtung (20) zum Senden und/oder Verwenden einer Profilinformation (220) oder mindestens Teilen einer Profilinformation (220), wobei die Profilinformation (220) von einer Server-Entität (140) an die Client-Kommunikationsvorrichtung (20) gesendet wird und die Profilinformation (220) in einem eingebetteten Teilnehmer-Identitätsmodul (21) oder durch ein eingebettetes Teilnehmer-Identitätsmodul (21) der Client-Kommunikationsvorrichtung (20) verwendet wird, wobei die Client-Kommunikationsvorrichtung (20) durch Verwenden der Profilinformation (220) befähigt wird, mit einem Mobilkommunikationsnetz (100) operativ zu kommunizieren, wobei die Client-Kommunikationsvorrichtung (20) dafür konfiguriert ist, eine Lightweight Machine-to-Machine-Kommunikationsschnittstelle zu der Server-Entität (140) einzurichten und die Profilinformation (220) gemäß dem Verfahren der Ansprüche 1 bis 8 zu empfangen und zu verwenden.

11. Server-Entität (140) zum Senden und/oder Verwenden einer Profilinformation (220) oder mindestens Teilen einer Profilinformation (220), wobei die Profilinformation (220) von einer Server-Entität (140) an eine Client-Kommunikationsvorrichtung (20) gesendet wird und die Profilinformation (220) in einem eingebetteten Teilnehmer-Identitätsmodul (21) oder durch ein eingebettetes Teilnehmer-Identitätsmodul (21) der Client-Kommunikationsvorrichtung (20) verwendet wird, wobei die Client-Kommunikationsvorrichtung (20) durch Verwenden der Profilinformation (220) befähigt wird, mit einem Mobilkommunikationsnetz (100) operativ zu kommunizieren, wobei die Server-Entität (140) dafür konfiguriert ist, eine Lightweight Machine-to-Machine-Kommunikationsschnittstelle zu der Client-Kommunikationsvorrichtung (20) einzurichten und die Profilinformation (220) gemäß dem Verfahren der Ansprüche 1 bis 8 bereitzustellen und zu senden.

12. Computerprogramm, umfassend einen computerlesbaren Programmcode, der, wenn er auf einem Computer und/oder in einer Client-Kommunikationsvorrichtung (20) und/oder in einer Server-Entität (140) und/oder in einem Netzknoten eines Mobilkommunikationsnetzes (100) oder teilweise in einer Client-Kommunikationsvorrichtung (20) und/oder teilweise in einer Server-Entität (140) und/oder teilweise in einem Netzknoten eines Mobilkommunikationsnetzes (100) ausgeführt wird, den Computer und/oder die Client-Kommunikationsvorrichtung (20) und/oder die Server-Entität (140) und/oder den Netzknoten des Mobilkommunikationsnetzes (100) veranlasst, ein Verfahren nach einem der Ansprüche 1 bis 8 durchzuführen.

13. Computerlesbares Medium, umfassend Instruktionen, die, wenn sie auf einem Computer und/oder in einer Client-Kommunikationsvorrichtung (20) und/oder in einer Server-Entität (140) und/oder in einem Netzknoten eines Mobilkommunikationsnetzes (100) oder teilweise in einer Client-Kommunikationsvorrichtung (20) und/oder teilweise in einer Server-Entität (140) und/oder teilweise in einem Netzknoten eines Mobilkommunikationsnetzes (100) ausgeführt werden, den Computer und/oder die Client-Kommunikationsvorrichtung (20) und/oder die Server-Entität (140) und/oder den Netzknoten des Mobilkommunikationsnetzes (100) veranlassen, ein Verfahren nach einem der Ansprüche 1 bis 8 durchzuführen.

## Revendications

1. Procédé permettant de transmettre et/ou d'utiliser des informations de profil (220) ou au moins des parties de celles-ci, les informations de profil (220) étant transmises par une entité serveur (140) à un dispositif de communication client (20) et les informations de profil (220) étant utilisées dans ou par un module embarqué d'identification d'abonné (21) du dispositif de communication client (20), dans lequel, moyennant l'utilisation des informations de profil (220), le dispositif de communication client (20) peut communiquer de manière fonctionnelle avec un réseau de communication mobile (100), dans lequel le dispositif de communication client (20) et/ou le module embarqué d'identification d'abonné (21) du dispositif de communication client (20) comprend/comprennent ou se voi(en)t attribuer des informations d'identificateur (22) qui sont spécifiques à ce dispositif de communication client (20) spécifique ou à ce module embarqué d'identification d'abonné (21) spécifique, dans lequel le réseau de communication mobile (100) et/ou l'entité serveur (140) comprend/comprennent ou se voi(en)t attribuer ou est/sont apte (s) à accéder à une base de données de profils (160) et/ou à un générateur de profil (170),
dans lequel la base de données de profils (160) comprend les informations de profil (220) associées ou attribuées aux informations d'identificateur (22) et/ou dans lequel le générateur de profil (170) génère les informations de profil (220) associées ou attribuées aux informations d'identificateur (22),
dans lequel le procédé comprend les étapes suivantes :
- dans une première étape, le dispositif de communication client (20) est temporairement connecté à l'entité serveur (140), dans lequel une interface de communication de machine à machine légère est établie entre le dispositif de communication client (20) et l'entité serveur (140),
- dans une deuxième étape, les informations de profil (220) sont transmises par l'entité serveur (140) au dispositif de communication client (20), à l'aide de l'interface de communication de machine à machine légère,
dans lequel les informations de profil (220) sont extraites sous une forme chiffrée de la base de données (160) en fonction des informations d'identificateur (22) du dispositif de communication client (20) et/ou du module embarqué d'identification d'abonné (21), ou
les informations de profil (220) sont chiffrées en fonction des informations d'identificateur (22) du dispositif de communication client (20) et/ou du module embarqué d'identification d'abonné (21) et la clé de chiffrement est extraite d'informations de clé publique (24) précédemment reçues en provenance du dispositif de communication client (20) et/ou du module embarqué d'identification d'abonné (21).

2. Procédé selon la revendication 1, dans lequel la transmission des informations de profil (220) dans la deuxième étape fait appel à une fonctionnalité de gestion de dispositifs de l'interface de communication de machine à machine légère, dans lequel la transmission des informations de profil (220) est déclenchée soit par le dispositif de communication client (20) soit par l'entité serveur (140),
dans lequel l'utilisation de l'interface de communication de machine à machine légère pour transmettre les informations de profil (220) dans la deuxième étape correspond en particulier à :
- l'utilisation de l'interface de communication de machine à machine légère de l'Open Mobile Alliance (OMA LWM2M : open mobile alliance lightweight machine-to-machine), en particulier à l'utilisation d'un ou de plusieurs des protocoles suivants :
- Constrained Application Protocol (COAP),
- Message Queuing Telemetry Transport (MQTT) et
- Hyper Text Transfer Protocol (HTTP),
ou
- l'utilisation directe d'un ou de plusieurs des protocoles suivants :
- Constrained Application Protocol (COAP),
- Message Queuing Telemetry Transport (MQTT), et
- Hyper Text Transfer Protocol (http).

3. Procédé selon l'une des revendications précédentes, dans lequel, dans une troisième étape faisant suite à la deuxième étape, les informations de profil (220) sont utilisées pour communiquer de manière fonctionnelle avec le réseau de communication mobile (100),
dans lequel les informations de profil (220) sont ou correspondent en particulier à des informations de profil de module embarqué d'identification d'abonné, à charger ou à installer dans le dispositif de communication client (20) ou dans le module embarqué d'identification d'abonné (21) du dispositif de communication client (20),
dans lequel les informations de profil (220) se rapportent en particulier à un abonnement permettant au dispositif de communication client (20) d'utiliser le réseau de communication mobile (100) ou de se rattacher à celui-ci ou de s'enregistrer dans celui-ci de manière fonctionnelle, dans lequel les informations de profil (220) sont en particulier des informations de profil qui sont spécifiques ou propres au dispositif de communication client (20).

4. Procédé selon l'une des revendications précédentes, dans lequel, au cours des première et deuxième étapes, une liaison de communication initiale ou temporaire est utilisée pour connecter préalablement le dispositif de communication client (20) à l'entité serveur (140),
dans lequel, par rapport au dispositif de communication client (20) utilisant les informations de profil (220) pour utiliser le réseau de communication mobile (100) ou se rattacher à celui-ci ou s'enregistrer dans celui-ci de manière fonctionnelle, la liaison de communication initiale ou temporaire correspond à :
- une technologie d'accès radio différente, en particulier une technologie d'accès radio par réseau local ou à courte portée, en particulier la technologie de réseau local sans fil (WLAN : wireless local area network) et/ou la technologie Bluetooth, et/ou
- des informations de profil de mise à disposition, dans lequel les informations de profil de mise à disposition sont en particulier soit
- des informations de profil d'amorçage soit
- des informations de profil concernant un autre ou un précédent réseau de communication mobile ou opérateur de réseau utilisé par le dispositif de communication client (20) soit encore
- des informations générales de profil qui ne sont pas spécifiques au dispositif de communication client (20).

5. Procédé selon l'une des revendications précédentes, dans lequel, afin de transmettre les informations de profil (220) de l'entité serveur (140) au dispositif de communication client (20), la deuxième étape comprend les sous-étapes suivantes :
- dans une première sous-étape, l'entité serveur (140) reçoit les informations d'identificateur (22) du dispositif de communication client (20) et/ou du module embarqué d'identification d'abonné (21), dans lequel l'entité serveur (140) reçoit en particulier également des informations de clé publique (24) correspondant à des informations de clé secrète (23) du dispositif de communication client (20) et/ou du module embarqué d'identification d'abonné (21),
- dans une deuxième sous-étape, l'entité serveur (140) transmet les informations de profil (220) au dispositif de communication client (20) et/ou au module embarqué d'identification d'abonné (21), dans lequel les informations de profil (220) sont transmises en particulier sous une forme chiffrée,
- dans une troisième sous-étape, le dispositif de communication client (20) installe et/ou active le profil de communication correspondant aux informations de profil (220), en particulier en fonction d'autres paramètres détectés par le dispositif de communication client (20), en particulier en fonction de la situation d'itinérance du dispositif de communication client (20) et/ou en fonction d'un indicateur de puissance de signal détecté par le dispositif de communication client (20).

6. Procédé selon l'une des revendications précédentes, dans lequel les informations de profil sont générées, en particulier par le générateur de profil (170), en fonction des informations d'identificateur (22) du dispositif de communication client (20) et/ou du module embarqué d'identification d'abonné (21).

7. Procédé selon l'une des revendications précédentes, dans lequel le module embarqué d'identification d'abonné (21) du dispositif de communication client (20) correspond à un ou plusieurs des éléments suivants :
- une carte à circuit intégré universel embarquée amovible, carte eUICC (embedded universal integrated circuit card) amovible,
- une carte à circuit intégré universel embarquée inamovible, carte eUICC inamovible,
- une carte à circuit intégré universel embarquée intégrée, carte eUICC intégrée,
- un module intégré d'identification d'abonné, module SIM (subscriber identity module) intégré,
dans lequel en particulier, les informations d'identificateur (22) et les informations de clé publique (24) ainsi que les informations de clé secrète (23) correspondent au module embarqué d'identification d'abonné (21), les informations de profil (220) étant utilisées dans ou par le module embarqué d'identification d'abonné (21).

8. Procédé selon l'une des revendications précédentes, dans lequel le dispositif de communication client (20) est un dispositif de communication de machine à machine ou un dispositif de communication de type machine, en particulier un dispositif de communication de machine à machine ou un dispositif de communication de type machine qui est un dispositif à contraintes de ressources, de sorte que la transmission d'informations de profil selon des procédures GSMA nécessiterait plus de 5 % de ressources énergétiques en particulier, de préférence plus de 10 % de ressources énergétiques en particulier.

9. Système permettant de transmettre et/ou d'utiliser des informations de profil (220) ou au moins des parties de celles-ci, les informations de profil (220) étant transmises par une entité serveur (140) à un dispositif de communication client (20) et les informations de profil (220) étant utilisées dans ou par un module embarqué d'identification d'abonné (21) du dispositif de communication client (20), dans lequel, moyennant l'utilisation des informations de profil (220), le dispositif de communication client (20) peut communiquer de manière fonctionnelle avec un réseau de communication mobile (100),
dans lequel le système comprend le réseau de communication mobile (100), l'entité serveur (140) et le dispositif de communication client (20), dans lequel le dispositif de communication client (20) et/ou le module embarqué d'identification d'abonné (21) du dispositif de communication client (20) comprend/comprennent ou se voi(en)t attribuer des informations d'identificateur (22) qui sont spécifiques à ce dispositif de communication client (20) spécifique ou à ce module embarqué d'identification d'abonné (21) spécifique, dans lequel le réseau de communication mobile (100) et/ou l'entité serveur (140) comprend/comprennent ou se voi(en)t attribuer ou est/sont configuré (e) (s) pour accéder à une base de données de profils (160) et/ou à un générateur de profil (170),
dans lequel la base de données de profils (160) comprend les informations de profil (220) associées ou attribuées aux informations d'identificateur (22) et/ou dans lequel le générateur de profil (170) est configuré pour générer les informations de profil (220) associées ou attribuées aux informations d'identificateur (22),
dans lequel le système est configuré de telle sorte que :
- le dispositif de communication client (20) soit temporairement connecté à l'entité serveur (140), dans lequel une interface de communication de machine à machine légère est établie entre le dispositif de communication client (20) et l'entité serveur (140),
- les informations de profil (220) soient transmises par l'entité serveur (140) au dispositif de communication client (20), à l'aide de l'interface de communication de machine à machine légère,
dans lequel le réseau de communication mobile (100) et/ou l'entité serveur (140) est/sont configuré(e)(s) pour extraire les informations de profil (220) sous une forme chiffrée de la base de données (160) en fonction des informations d'identificateur (22) du dispositif de communication client (20) et/ou du module embarqué d'identification d'abonné (21), ou
dans lequel le générateur de profil (170) est configuré pour chiffrer les informations de profil (220) en fonction des informations d'identificateur (22) du dispositif de communication client (20) et/ou du module embarqué d'identification d'abonné (21), dans lequel le générateur de profil (170) est configuré pour extraire la clé de chiffrement, des informations de clé publique (24) précédemment reçues en provenance du dispositif de communication client (20) et/ou du module embarqué d'identification d'abonné (21).

10. Dispositif de communication client (20) permettant de transmettre et/ou d'utiliser des informations de profil (220) ou au moins des parties de celles-ci, les informations de profil (220) étant transmises par une entité serveur (140) au dispositif de communication client (20) et les informations de profil (220) étant utilisées dans ou par un module embarqué d'identification d'abonné (21) du dispositif de communication client (20), dans lequel, moyennant l'utilisation des informations de profil (220), le dispositif de communication client (20) peut communiquer de manière fonctionnelle avec un réseau de communication mobile (100),
dans lequel le dispositif de communication client (20) est configuré pour établir une interface de communication de machine à machine légère avec l'entité serveur (140) et pour recevoir et utiliser les informations de profil (220) en conformité avec le procédé selon les revendications 1 à 8.

11. Entité serveur (140) permettant de transmettre et/ou d'utiliser des informations de profil (220) ou au moins des parties de celles-ci, les informations de profil (220) étant transmises par l'entité serveur (140) à un dispositif de communication client (20) et les informations de profil (220) étant utilisées dans ou par un module embarqué d'identification d'abonné (21) du dispositif de communication client (20), dans lequel, moyennant l'utilisation des informations de profil (220), le dispositif de communication client (20) peut communiquer de manière fonctionnelle avec un réseau de communication mobile (100), dans lequel l'entité serveur (140) est configurée pour établir une interface de communication de machine à machine légère avec le dispositif de communication client (20) et pour fournir et transmettre les informations de profil (220) en conformité avec le procédé selon les revendications 1 à 8.

12. Programme informatique comprenant un code de programme lisible par ordinateur, qui, lorsqu'il est exécuté sur un ordinateur et/ou sur un dispositif de communication client (20) et/ou sur une entité serveur (140) et/ou sur un nœud de réseau d'un réseau de communication mobile (100), ou en partie sur un dispositif de communication client (20) et/ou en partie sur une entité serveur (140) et/ou en partie sur un nœud de réseau d'un réseau de communication mobile (100), fait mettre en œuvre à l'ordinateur et/ou au dispositif de communication client (20) et/ou à l'entité serveur (140) et/ou au nœud de réseau du réseau de communication mobile (100) un procédé selon l'une des revendications 1 à 8.

13. Support lisible par ordinateur, comprenant des instructions qui, lorsqu'elles sont exécutées sur un ordinateur et/ou sur un dispositif de communication client (20) et/ou sur une entité serveur (140) et/ou sur un nœud de réseau d'un réseau de communication mobile (100), ou en partie sur un dispositif de communication client (20) et/ou en partie sur une entité serveur (140) et/ou en partie sur un nœud de réseau d'un réseau de communication mobile (100), fait mettre en œuvre à l'ordinateur et/ou au dispositif de communication client (20) et/ou à l'entité serveur (140) et/ou au nœud de réseau du réseau de communication mobile (100) un procédé selon l'une des revendications 1 à 8.
